# EUROPÄISCHE PATENTSCHRIFT

(11) **EP 3 049 263 B1**
(45) Veröffentlichungstag und Bekanntmachung des Hinweises auf die Patenterteilung: **06.09.2017**
(21) Anmeldenummer: 14744283.4
(22) Anmeldetag: 26.07.2014
(51) Int. Cl.: B60G 17/015, B60K 5/12, B60G 21/055, F16F 13/26

(54) **VERFAHREN ZUM BETRIEB EINES ELEKTROMECHANISCHEN STELLERS IN EINEM KRAFTFAHRZEUG**
METHOD FOR OPERATING AN ELECTROMECHANICAL ACTUATOR IN A MOTOR VEHICLE
PROCÉDÉ POUR FAIRE FONCTIONNER UN ACTIONNEUR ÉLECTROMÉCANIQUE DANS UN VEHICULE

(30) Priorität: 25.09.2013 DE 102013015984
(43) Veröffentlichungstag der Anmeldung: 03.08.2016
(73) Patentinhaber: Audi AG, 85045 Ingolstadt (DE)
(72) Erfinder: SCHMITT, Joachim, 85051 Ingolstadt (DE)
(74) Vertreter: Reichert, Thomas Klaus
(86) Internationale Anmeldenummer: PCT/EP2014/002043
(87) Internationale Veröffentlichungsnummer: WO 2015/043693

(56) Entgegenhaltungen:
- DE-A1- 10 233 783
- DE-A1-102004 015 036
- DE-A1-102009 005 899
- DE-A1-102011 106 246
- DE-C1- 4 104 168
- US-A- 5 409 078
- "COORDINATION OF ENGINE MOUNT WITH CONTROLLED SUSPENSION", RESEARCH DISCLOSURE, MASON PUBLICATIONS, HAMPSHIRE, GB, Nr. 342, 1. Oktober 1992 (1992-10-01), Seite 759, XP000326651, ISSN: 0374-4353

## Beschreibung

Die vorliegende Erfindung betrifft ein Verfahren zum Betrieb eines elektromechanischen oder hydraulischen Stellers in einem Kraftfahrzeug nach dem Oberbegriff des Patentanspruches 1 sowie eine Vorrichtung zur Durchführung des Verfahrens nach dem Patentanspruch 8.

Aus der DE 10 2011 106 246 A1 ist ein gattungsgemäßer elektromechanischer Steller bekannt, der in einem Fahrwerksystem eines Kraftfahrzeugs eingesetzt wird, um insbesondere fahrdynamische Eingriffe zu ermöglichen. Dieser ist Bestandteil eines Drehfederstabsystems, bei dem je Fahrzeugseite ein über eine Motor-Getriebe-Einheit bzw. einen Aktuator variabel vorspannbarer Drehfederstab über einen Abtriebshebel auf jeweils ein Radaufhängungselement der beidseitigen Radaufhängung des Kraftfahrzeugs wirkt. Das Drehfederstabsystem bildet einen aktiven Drehsteller oder Stabilisator, der zugleich als Speicherfeder wirkend eine Niveauverstellung der Karosserie des Kraftfahrzeugs ermöglicht und zudem Wank- und Nickneigungen entgegen wirken kann. Derartige Steller unterliegen im Fahrbetrieb einer hohen Dynamik und hohen Drehzahlen und können demzufolge störende Geräuschquellen bilden.

Im Stand der Technik werden die Betriebsschwingungen des Stellers durch eine entsprechend ausgelegte elastische Lagerung oder einem Schwingungstilger gedämpft, deren Dämpfungsfähigkeiten jedoch begrenzt sind.

Generell sind beispielshaft aus der DE 10 2004 015 036 B4 aktive Aggregatelager mit zum Beispiel einer hydraulischen Dämpfung bekannt, die für unterschiedliche Schwingungsanregungen und Schwingungsamplituden in ihrer Dämpfungscharakteristik elektrisch verstellbar sind und somit wirkungsvoll insbesondere niederfrequente Anregungen dämpfen können. Bei einem solchen aktiven Lagersystem wird eine Aktorik des Aggregatelagers mit einem Stellsignal angesteuert, um eine weitgehende Schwingungskompensation der Aggregateschwingung im Fahrbetrieb zu erreichen.

Die Aufgabe der Erfindung besteht darin, ein Verfahren sowie eine Vorrichtung zur Durchführung des Verfahrens bereitzustellen, mittels dem nahezu ohne Mehraufwand die Schwingungs- und Geräuschentwicklung von elektromechanischen Stellern verminderbar ist.

Die Aufgabe ist durch die Merkmale des Patentanspruchs 1 oder 8 gelöst. Vorteilhafte Weiterbildungen des Verfahrens und eine besonders bevorzugte Vorrichtung zur Durchführung des Verfahrens sind in den Unteransprüchen offenbart.

Erfindungsgemäß wird vorgeschlagen, dass die Aggregatelager zugleich zum Dämpfen von Schwingungsanregungen des Drehfederstabsystems angesteuert werden. Durch entsprechende Abstimmung und Ansteuerung der Aggregatelager insbesondere im höherfrequenten Anregungsbereich gelingt es, die Dämpfungscharakteristik der Aggregatelager dazu einzusetzen, dass von den Stellern ausgehende Geräusche und/oder Vibrationen eliminiert bzw. unterdrückt werden.

Besonders bevorzugt können über die Aggregatelager den Schwingungen des Drehfederstabsystems Gegenschwingungen des Antriebsaggregats überlagert werden. Dabei kann durch die Wahl des in den Aggregatelagern eingesetzten Elastomers (Lagerkörpers) und der steuerbaren Drosselwirkungen (bei hydraulischen Aggregatelagern) niederfrequente Schwingungen des Aggregats (insbesondere einer Brennkraftmaschine) gedämpft und im typischen Frequenzbereich des Stellers eine dynamische Steifigkeit generiert werden, die durch phasenverschobene Gegenschwingungen die Schwingungsanregung des Stellers zumindest vermindern.

In einer regelungstechnischen Realisierung kann eine Regeleinheit die im Fahrbetrieb auftretende Antriebsaggregate-Schwingung als ein erstes aktuelles Störsignal erfassen. Auf der Grundlage des erfassten Störsignals erzeugt die Regeleinheit ein erstes Stellsignal, mit dem die Aktorik des Aggregatelagers zur Reduzierung des ersten Störsignals angesteuert wird. Zudem kann die Regeleinheit eine Betriebsschwingung des elektromechanischen Stellers als ein zweites aktuelles Störsignal erfassen. Auf der Grundlage dieses zweiten Störsignals erzeugt die Regeleinheit ein zweites Stellsignal, mit dem die Aktorik des Aggregatelagers zur Reduzierung des zweiten Störsignals angesteuert wird.

Zur Erfassung des oben erwähnten zweiten Störsignals kann an dem elektromechanischen Steller zumindest ein Schwingungssensoren angeordnet sein, dessen Signale in der Regeleinheit zur zusätzlichen Ansteuerung des Aggregatelagers ausgewertet werden.

Dabei kann die Regeleinheit ein im Kraftfahrzeug ohnehin vorhandenes Motorsteuergerät sein, in dem fahrdynamische und aggregatspezifische Parameter (Lastzustand, Drehzahl, etc.) erfasst und nach Maßgabe dieser Daten die Aggregatelager gesteuert werden.

Des Weiteren können die Ansteuersignale des elektromechanischen Stellers zugleich zur zusätzlichen Steuerung der aktiven Aggregatelager verwendet werden, so dass gegebenenfalls ohne der Verwendung von Sensoren eine adäquate Schwingungsdämpfung verwirklichbar ist. Dazu kann besonders zweckmäßig die Ansteuerung des Aggregatelagers abhängig von den Steuersignalen des elektromechanischen Stellers empirisch ermittelt und in einem Steuergerät abgelegt sein.

Zur Durchführung des Verfahrens wird insbesondere vorgeschlagen, dass räumlich nahe zumindest einem elektromechanischen Steller, insbesondere einem auf Radführungselemente der Radaufhängungen des Kraftfahrzeugs wirkenden Drehfederstabsystems, aktiv in ihrer Dämpfungscharakteristik verstellbare Aggregatelager zur Lagerung eines Antriebsaggregats des Kraftfahrzeugs am Fahrzeugaufbau oder an einem Hilfsrahmen angeordnet sind und dass die Aggregatelager mittels eines elektronischen Steuergeräts zur Dämpfung der Schwingungsanregungen des Stellers angesteuert sind.

Ferner kann an dem elektromechanischen Steller zumindest ein schwingungsaufnehmender Sensor vorgesehen sein, dessen Signale zur Ansteuerung der aktiven Aggregatelager dem Steuergerät signaltechnisch zuführbar ist.

Das Drehfederstabsystem kann je Radaufhängung einen Aktuator bestehend aus einem Elektromotor und zumindest einem Getriebe aufweisen, die auf zumindest eine Drehfeder deren Vorspannung verändernd wirken, wobei je Aktuator ein Sensor vorgesehen ist und die Sensoren mit dem Steuergerät verbunden sind. Gegebenenfalls können dabei die Signale der beiden Sensoren im Steuergerät getrennt auswertbar sein, wobei über das Steuergerät nur das dem jeweiligen Aktuator am Nächsten liegende Aggregatelager angesteuert ist.

Schließlich kann der elektromechanische Steller bzw. das Drehfederstabsystem fest mit dem Hilfsrahmen des Kraftfahrzeugs verbunden, insbesondere verschraubt sein, auf dem auch das Antriebsaggregat zumindest teilweise über die aktiven Aggregatelager gelagert ist. Dies hat den Vorteil einer einfachen Befestigung ohne schwingungsdämpfernde Mittel und bewirkt zudem ein verbessertes Ansprechverhalten des Drehfederstabsystems.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: eine grob schematische Ansicht eines Drehfederstabsystems für die Radaufhängung eines Kraftfahrzeugs, dessen beidseitige Aktuatoren nahe aktiver Aggregatelager zur Lagerung eines Antriebsaggregats positioniert sind und schwingungsaufnehmende Sensoren tragen, die mit einem die Aggregatelager ansteuerndem, elektronischen Motorsteuergerät verbunden sind;
- Fig. 2: einen Regelkreis zur Durchführung des erfindungsgemäßen Verfahrens; und
- Fig. 3: das Drehfederstabsystem und die Aggregatelager in einer Ansicht von oben.

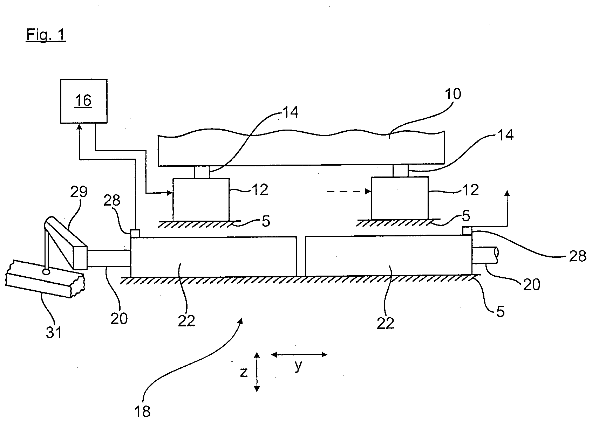

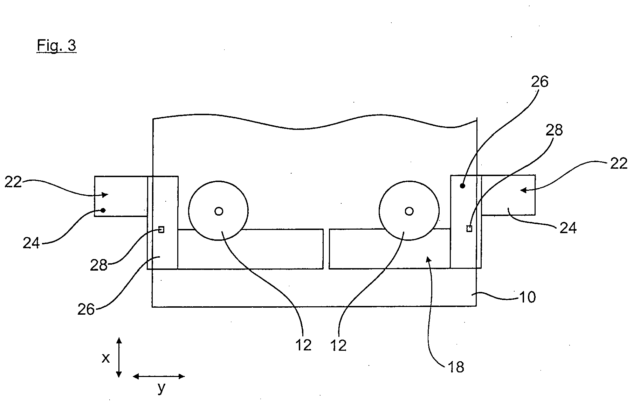

In den Fig. 1 und 3 ist in einer grobschematischer Darstellung ein Antriebsaggregat, insbesondere eine Brennkraftmaschine 10, in Umrissen angedeutet, die im hier interessierenden Bereich über zwei, beiderseits angeordnete Aggregatelager 12 auf einer angedeuteten fahrzeugseitigen Tragstruktur 5, etwa einem Hilfsrahmen, über entsprechende Motorstützen 14 schwingungsisoliert gelagert ist. Der Hilfsrahmen ist in der Regel über schwingungsdämpfende Lager mit dem Aufbau des Kraftfahrzeugs verbunden, während die Gehäuse der Aggregatelager 12 mit dem Hilfsrahmen fest verschraubt sind.

Die aktiven Aggregatelager 12 können hydraulisch dämpfende Lager an sich bekannter Bauart sein, die angesteuert über ein elektronisches Steuergerät, insbesondere ein im Fahrzeug bereits vorhandenes Motorsteuergerät 16, in ihrer Dämpfungscharakteristik insbesondere zwischen niederfrequenter und hochfrequenter Schwingungsanregung veränderbar sind.

Ebenfalls an der Tragstruktur 5 befestigt ist ein Drehfederstabsystem 18, das sich aus zwei in der Fahrzeugmitte getrennten, quer zur Fahrzeuglängsrichtung angeordneten Drehfederstäben 20 und zwei beiderseits angeordneten, elektromechanischen Stellern 22 zusammensetzt.

Die Drehfederstäbe 20 und die Steller 22 können wie in der eingangs angeführten DE 10 2009 005 899 A1 ausgeführt sein, wobei die Steller 22 durch einen achsparallelen Elektromotor 24 (Fig. 3) und zumindest ein Getriebe, zum Beispiel einen Umschlingungstrieb 26, gebildet sein können.

Die Drehfederstäbe 20 sind mit dem Getriebe 26 trieblich verbunden und über jeweils einen Abtriebshebel 29 mit einem Radführungselement 31 der beidseitigen Radaufhängung des Kraftfahrzeugs gelenkig verbunden.

Durch Ansteuerung der Elektromotoren 24 der Steller 22 können zur Niveauregelung und zum Wank- und Nickausgleich der Karosserie des Kraftfahrzeugs die als Speicherfeder zu einer Tragfeder der Radaufhängungen wirkenden Drehstäbe 20 in ihrer Vorspannung verändert werden, wobei die Steller 22 entsprechend dynamisch und mit relativ hohen Stellkräften belastet sind.

Die Position der aktiven Aggregatelager 12 und der Steller 22 des am Hilfsrahmen befestigten Drehfederstabsystems 18 liegt nahe beieinander (vergleiche Fig. 1 oder 3). Dies ermöglicht es, die veränderliche Dämpfungscharakteristik der Aggregatelager 12 zusätzlich zur Verminderung von sich auf die Fahrzeugkarosserie übertragenden Geräuschen oder Vibrationen durch die Steller 22 einzusetzen.

Dazu sind an den Stellern 22 bevorzugt im Bereich der Getriebe 26 Schwingungssensoren 28 vorgesehen, die signaltechnisch mit dem Motorsteuergerät 16 verbunden sind (Fig. 1).

Dem Motorsteuergerät 16 werden in bekannter Weise motorspezifische und fahrspezifische Daten wie Last, Drehzahl der Brennkraftmaschine und Geschwindigkeit, Lenkwinkel, Querbeschleunigung, etc. zugeführt, um unter anderem die aktiven Aggregatelager 12 anzusteuern und in ihrer Dämpfungscharakteristik entsprechend zu verändern.

Zusätzlich ist das Motorsteuergerät 16 derart modifiziert, dass es bei relevanten Betriebszuständen der Steller 22 mit entsprechender Schwingungsanregung, die über die Schwingungssensoren 28 erfasst und dem Motorsteuergerät 16 zugeführt werden, zusätzlich die aktiven Aggregatelager 12 ansteuert und in ihrer Dämpfungscharakteristik anpasst.

Dies kann derart erfolgen, dass durch Auslegung und Abstimmung der Funktionsteile der Aggregatelager 12 im Frequenzbereich der Aktuatoren 22 eine dynamische Steifigkeit generiert wird, die zwischen dem Hilfsrahmen bzw. den fest damit verbundenen Stellern 22 um 180° phasenverschobene Gegenschwingungen des Antriebsaggregats 10 überträgt, die die von den Aktuatoren 22 ausgehenden Schwingungen löschen bzw. die Übertragung von Geräuschen und/oder Vibrationen eliminiert.

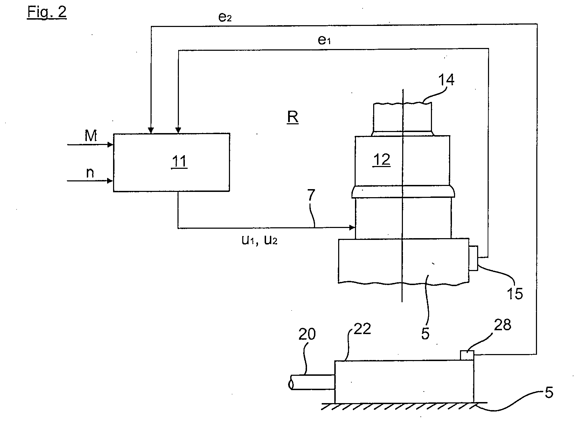

In der Fig. 2 ist beispielhaft eine regelungstechnische Realisierung der Erfindung gezeigt. Demzufolge ist das nicht dargestellte Antriebsaggregat 10 über die Motorstütze 14 unter Zwischenschaltung des aktiven Aggregatelagers 12 auf der Tragstruktur 5 einer Fahrzeugkarosserie abgestützt. Das Aggregatelager 12 weist zum Beispiel eine nicht gezeigte Hydraulikkammer mit einem elektrodynamischen Aktor auf, der von der Regeleinheit 16 elektrisch ansteuerbar ist.

Die Regeleinheit 16, die Aktorik sowie ein am karosserieseitigen Lagerfußpunkt des Aggregatelagers 12 angeordneter Fehlersensor 15 bilden zusammen mit dem Aggregatelager 12 (Regelstrecke) einen Regelkreis R. Der Regelkreis R steuert die Aktorik so an, dass das Aggregatelager 12 mit einer Gegenschwingung beaufschlagt wird, mit der eine betriebsbedingte Motorschwingung weitgehend kompensierbar ist. Über den Fehlersensor 15 wird ein aktuelles Störsignal e₁ zur Regeleinheit 11 rückgeführt. Zusätzlich weist die Regeleinheit 11 einen Signaleingang für ein Motormoment M und einen Signaleingang für die Motordrehzahl n auf. Die Regeleinheit 11 erzeugt das, die Gegenschwingung bildende Stellsignal u1, mit dem die Aktorik des Aggregatelagers 12 angesteuert wird.

Zudem ist in dem in der Fig. 2 gezeigten Regelkreis R ein Sensor 28 zur Erfassung einer Betriebsschwingung des Stellers 22 eingebunden. Die vom Sensor 28 erfasste Betriebsschwingung bildet ein zweites Störsignal e₂, auf dessen Grundlage die Regeleinheit 16 ein zweites Stellsignal u₂ erzeugt. Mit dem zweiten Stellsignal u₂ wird ebenfalls die Aktorik des Aggregatelagers 12 angesteuert, um das zweite Störsignal e₂, das heißt die Betriebsschwingung des Stellers 22, zu reduzieren.

Durch die erfindungsgemäße Maßnahme kann das Drehfederstabsystem 18 ohne störende Geräuschübertragung fest mit dem Hilfsrahmen verbunden werden, was neben der einfacheren Befestigung (keine geräuschdämmenden Mittel) eine verbesserte Ansprechempfindlichkeit des Systems ermöglicht.

Gegebenenfalls können der linke und der rechte Schwingungssensor 28 im Motorsteuergerät 16 getrennt ausgewertet und jeweils nur das linke oder das rechte Aggregatelager 12 entsprechend angesteuert werden.

Abweichend von dem beschriebenen Verfahren können gegebenenfalls in dem Motorsteuergerät 16 Kennfelder abgelegt sein, die aus den motor- und fahrspezifischen Daten die Betriebszustände des Kraftfahrzeugs erfassen, bei denen durch die Aktuatoren 22 relevante Schwingungsanregungen auftreten, die dann durch Ansteuern der aktiven Aggregatelager 12 beseitigt oder zumindest vermindert werden. Die besagten Daten bzw. Kennfelder können beispielsweise empirisch bestimmt werden. Die Schwingungssensoren 28 könnten dann gegebenenfalls entfallen.

Die Aggregatelager 12 und das Drehfederstabsystem 18 mit den Drehfedern 20 und den Aktuatoren 22 könnten gegebenenfalls abweichend von der beschriebenen Ausführung auch unmittelbar am Aufbau des Kraftfahrzeugs angeordnet sein.

In dem obigen Ausführungsbeispiel sind zwei Aktuatoren bzw. Steller 22 je Fahrzeugseite im Einsatz. Die Erfindung ist jedoch nicht auf dieses Ausführungsbeispiel beschränkt. Vielmehr kann das Drehfederstabsystem 18 auch als ein Wankstabilisator ausgeführt sein, der mit lediglich einen Aktuator 22 arbeitet, der mit zwei Stabilisatorhälften in Wirkverbindung ist. Außerdem kann der Elektromotor 24 im Gegensatz zum gezeigten Ausführungsbeispiel direkt über ein Motorlager mit geeignetem Übertragungsverhalten am Gehäuse des Stellers 22 angebunden sein.

## Patentansprüche

1. Verfahren zum Betrieb zumindest eines Stellers (22) in einem Kraftfahrzeug, der Bestandteil eines Drehfederstabsystems (18) einer Radaufhängung des Kraftfahrzeugs ist und an einer fahrzeugseitigen Tragstruktur (5) montiert ist, wobei durch Betätigung des Stellers (22) eine auf ein Radführungselement (31) der Radaufhängung einwirkende Vorspannung geändert wird, **dadurch gekennzeichnet, dass** benachbart zum Steller (22) ein Antriebsaggregat (10) über zumindest ein aktives Aggregatelager (12), das zur Reduzierung einer Antriebsaggregate-Schwingung angesteuert wird, an der fahrzeugseitigen Tragstruktur (5) gelagert ist, und dass das Aggregatelager (12) zur Reduzierung einer Betriebsschwingung des Stellers (22) angesteuert wird.

2. Verfahren nach Anspruch 1, **dadurch gekennzeichnet, dass** in dem Verfahren eine Regeleinheit (16) die im Fahrbetrieb auftretende Antriebsaggregate-Schwingung als ein erstes aktuelles Störsignal (e₁) erfasst, auf dessen Grundlage die Regeleinheit (16) ein erstes Stellsignal (u₁) erzeugt, mit dem die Aktorik des Aggregatelagers (12) zur Reduzierung des ersten Störsignals (e₁) angesteuert wird.

3. Verfahren nach Anspruch 1 oder 2, **dadurch gekennzeichnet, dass** in dem Verfahren die Regeleinheit (16) eine Betriebsschwingung des elektromechanischen Stellers (22) als ein zweites aktuelles Störsignal (e₂) erfasst, auf dessen Grundlage die Regeleinheit (16) ein zweites Stellsignal (u₂) erzeugt, mit dem die Aktorik des Aggregatelagers (12) zur Reduzierung des zweiten Störsignals (e₂) angesteuert wird.

4. Verfahren nach einem der vorhergehenden Ansprüche, **dadurch gekennzeichnet, dass** mittels des Aggregatelagers (12) der Betriebsschwingung des Stellers (22) eine Gegenschwingung des Antriebsaggregats (10) überlagert wird, und/oder dass die ersten und zweiten Stellsignale (u₁, u₂) in einem Parallelbetrieb einander überlagert werden, und/oder das erste Stellsignal (u₁) eine niederfrequente Gegenschwingung der Antriebsaggregate-Schwingung ist und das zweite Stellsignal (u₂) eine hochfrequente Gegenschwingung der der Betriebsschwingung des elektromechanischen Stellers (22) ist.

5. Verfahren nach einem der vorhergehenden Ansprüche, **dadurch gekennzeichnet, dass** dem elektromechanischen Steller (22) zumindest ein Schwingungssensor (28) zugeordnet ist, dessen Signal in der Regeleinheit (16) zur Ansteuerung der Aggregatelager (12) ausgewertet wird.

6. Verfahren nach einem der vorhergehenden Ansprüche 2 bis 5, **dadurch gekennzeichnet, dass** das die Regeleinheit ein Motorsteuergerät (16) ist, in dem fahrdynamische und aggregatspezifische Parameter erfasst und nach Maßgabe dieser Daten die Aggregatelager (12) gesteuert wird.

7. Verfahren nach einem der vorhergehenden Ansprüche, **dadurch gekennzeichnet, dass** die Ansteuerung des Aggregatelagers (12) abhängig von dem Steuersignal des elektromechanischen Stellers (22) empirisch ermittelt und in der Regeleinheit (16) abgelegt wird.

8. Vorrichtung zur Durchführung des Verfahrens nach einem der vorhergehenden Ansprüche, **dadurch gekennzeichnet, dass** räumlich nahe zumindest eines elektromechanischen Stellers (22), der Bestandteil eines auf ein Radführungselement (31) der Radaufhängung des Kraftfahrzeugs wirkenden Drehfederstabsystems (18) ist, zumindest ein aktiv in seiner Dämpfungscharakteristik verstellbares Aggregatelager (12) zur Lagerung eines Antriebsaggregats (10) des Kraftfahrzeugs an der fahrzeugseitigen Tragstruktur (5) angeordnet ist, und dass zur Dämpfung der Betriebsschwingung des Stellers (22) das Aggregatelager (12) mittels einer Regeleinheit (16) ansteuerbar ist.

9. Vorrichtung nach Anspruch 8, **dadurch gekennzeichnet, dass** an dem elektromechanischen Steller (22) zumindest ein Schwingungssensor (28) vorgesehen ist, dessen Signale zur Ansteuerung der aktiven Aggregatelager (12) der Regeleinheit (16) zuführbar ist.

10. Vorrichtung nach Anspruch 8 oder 9, **dadurch gekennzeichnet, dass** das Drehfederstabsystem (18) je Radaufhängung einen Steller (22), bestehend aus einem Elektromotor (24) und zumindest einem Getriebe (26), aufweist, die auf zumindest einen Drehfederstab (20) dessen Vorspannung verändernd wirken, und dass je Steller (22) ein Schwingungssensor (28) vorgesehen ist, der mit dem Regeleinheit (16) verbunden ist.

11. Vorrichtung nach Anspruch 10, **dadurch gekennzeichnet, dass** die Signale der beiden Schwingungssensoren (28) in der Regeleinheit (16) getrennt auswertbar sind, und dass über die Regeleinheit (16) nur das dem jeweiligen Steller (22) am nächsten liegende Aggregatelager (12) angesteuert ist.

12. Vorrichtung nach einem der vorhergehenden Ansprüche 8 bis 11, **dadurch gekennzeichnet, dass** der elektromechanische Steller (22) bzw. das Drehfederstabsystem (18) fest mit der Tragstruktur (5), insbesondere einem Hilfsrahmen des Kraftfahrzeugs, verbunden, insbesondere verschraubt ist, und dass das Antriebsaggregat (10) zumindest teilweise über die aktiven Aggregatelager (12) auf dem Hilfsrahmen gelagert ist.

## Claims

1. Method for operating at least one setting element (22) in a motor vehicle, which element is a component of a torsion spring rod system (18) of a wheel suspension of the motor vehicle and is mounted on a support structure (5) on the vehicle, wherein by actuating the setting element (22) a prestress acting on a wheel guide element (31) of the wheel suspension is changed, **characterised in that** adjacent to the setting element (22) a drive unit (10) is mounted on the support structure (5) on the vehicle by at least one active engine unit mount (12), which is controlled in order to reduce an engine unit vibration, and **in that** the engine unit mount (12) is controlled in order to reduce an operational vibration of the setting element (22).

2. Method according to claim 1, **characterised in that** in the method a control unit (16) detects the drive unit vibration that has occurred during drive operation as a first current interfering signal (e₁), on the basis of which signal the control unit (16) generates a first setting signal (u₁) with which the actuating elements of the engine unit mount (12) are controlled in order to reduce the first interfering signal (e₁).

3. Method according to claim 1 or 2, **characterised in that** in the method the control unit (16) detects an operational vibration of the electromechanical setting element (22) as a second current interfering signal (e₂), on the basis of which signal the control unit (16) generates a second setting signal (u₂) with which the actuating elements of the engine unit mount (12) are controlled in order to reduce the second interfering signal (e₂).

4. Method as claimed in one of the preceding claims, **characterised in that** by means of the engine unit mount (12) a counter vibration of the drive unit (10) is superimposed on the operational vibration of the setting element (22), and/or **in that** the first and second setting signals (u₁, u₂)are superimposed on each other in a parallel operation, and/or the first setting signal (u₁) is a low-frequency counter vibration of the drive unit vibration and the second setting signal (u₂) is a high-frequency counter vibration of the operational vibration of the electromechanical setting element (22).

5. Method according to any of the preceding claims, **characterised in that** associated with the electromechanical setting element (22) is at least one vibration sensor (28) whose signal is evaluated in the control unit (16) in order to control the engine unit mount (12).

6. Method according to any of preceding claims 2 to 5, **characterised in that** the control unit is an engine controller (16) in which dynamic driving performance and engine unit-specific parameters are detected and the engine unit mount (12) is controlled according to this data.

7. Method according to any of the preceding claims, **characterised in that** control of the engine unit mount (12) is empirically determined as a function of the control signal of the electromechanical setting element (22) and is stored in the control unit (16).

8. Device for carrying out the method as claimed in any of the preceding claims, **characterised in that** at least one electromechanical setting element (22), which is a component of a torsion spring rod system (18) acting on a wheel suspension element (31) of the wheel suspension of the motor vehicle, is arranged spatially close to at least one engine unit mount (12) that can be actively adjusted in terms of its damping characteristics in order to mount a drive unit (10) of the motor vehicle on the support structure (5) on the vehicle, and **in that** in order to damp the operational vibration of the setting element (22) the engine unit mount (12) can be controlled by means of a control unit (16).

9. Device according to claim 8, **characterised in that** provided on the electromechanical setting element (22) is at least one vibration sensor (28) whose signals can be fed to the control unit (16) in order to control the active engine unit mount (12).

10. Device according to claim 8 or 9, **characterised in that** the torsion spring rod system (18) has one setting element (22) per wheel suspension, comprising an electric motor (24) and at least one gearing mechanism (26), which act on at least one torsion spring rod (20) to change its prestress, and **in that** one vibration sensor (28) is provided per setting element (22), which sensor is connected to the control unit (16).

11. Device according to claim 10, **characterised in that** the signals of the two vibration sensors (28) can be evaluated separately in the control unit (16) and that only the engine unit mount (12) closest to the respective setting element (22) is controlled by the control unit (16).

12. Device according to any of the preceding claims 8 to 11, **characterised in that** the electromagnetic setting element (22) or the torsion spring rod system (18) is permanently connected, in particular screwed, to the support structure (5), in particular an auxiliary frame of the motor vehicle, and that the drive unit (10) is mounted on the auxiliary frame at least partially by way of the active engine unit mount (12).

## Revendications

1. Procédé pour faire fonctionner au moins un actionneur (22) dans un véhicule automobile qui fait partie d'un système de barre de torsion (18) d'une suspension de roue du véhicule automobile et est monté sur une structure de support (5) côté véhicule, dans lequel une précontrainte agissant sur un élément de guidage de roue (31) de la suspension de roue est modifiée par l'actionnement de l'actionneur (22), **caractérisé en ce qu'**un groupe d'entraînement (10) est logé de manière contiguë à l'actionneur (22) par le biais d'au moins un palier de groupe (12) actif, qui est commandé pour la réduction d'une oscillation de groupe d'entraînement, sur la structure de support (5) côté véhicule, et que le palier de groupe (12) est commandé pour la réduction d'une oscillation de fonctionnement de l'actionneur (22).

2. Procédé selon la revendication 1, **caractérisé en ce que** dans le procédé, une unité de régulation (16) détecte l'oscillation de groupe d'entraînement survenant en mode de déplacement comme un premier signal de perturbation (e₁) actuel, sur la base duquel l'unité de régulation (16) génère un premier signal de réglage (u₁), avec lequel les actionneurs du palier de groupe (12) sont commandés pour la réduction du premier signal de perturbation (e₁).

3. Procédé selon la revendication 1 ou 2, **caractérisé en ce que** dans le procédé, l'unité de régulation (16) détecte une oscillation de fonctionnement de l'actionneur (22) électromécanique comme un second signal de perturbation (e₂) actuel, sur la base duquel l'unité de régulation (16) génère un second signal de réglage (u₂), avec lequel les actionneurs du palier de groupe (12) sont commandés pour la réduction du second signal de perturbation (e₂).

4. Procédé selon l'une quelconque des revendications précédentes, **caractérisé en ce qu'**à l'aide du palier de groupe (12), une oscillation antagoniste du groupe d'entraînement (10) est superposée à l'oscillation de fonctionnement de l'actionneur (22) et/ou que les premier et second signaux de réglage (u₁, u₂) sont superposés dans un mode parallèle l'un à l'autre et/ou le premier signal de réglage (u₁) est une oscillation antagoniste à basse fréquence de l'oscillation de groupe d'entraînement et le second signal de réglage (u₂) est une oscillation antagoniste à haute fréquence de de l'oscillation de fonctionnement de l'actionneur (22) électromécanique.

5. Procédé selon l'une quelconque des revendications précédentes, **caractérisé en ce qu'**au moins un capteur d'oscillation (28) est associé à l'actionneur (22) électromécanique, dont le signal est évalué dans l'unité de régulation (16) pour la commande des paliers de groupe (12).

6. Procédé selon l'une quelconque des revendications précédentes 2 à 5, **caractérisé en ce que** I' l'unité de régulation est un appareil de commande de moteur (16), dans lequel des paramètres de dynamique de conduite et spécifiques au groupe sont détectés et les paliers de groupe (12) sont commandés conformément à ces données.

7. Procédé selon l'une quelconque des revendications précédentes, **caractérisé en ce que** la commande du palier de groupe (12) est déterminée empiriquement en fonction du signal de commande de l'actionneur (22) électromagnétique et est enregistrée dans l'unité de régulation (16).

8. Dispositif de réalisation du procédé selon l'une quelconque des revendications précédentes, **caractérisé en ce que** spatialement près d'au moins un actionneur (22) électromécanique qui fait partie d'un système de barre de torsion (18) agissant sur un élément de guidage de roue (31) de la suspension de roue du véhicule automobile, au moins un palier de groupe (12) réglable activement dans sa caractéristique d'amortissement est agencé pour le logement d'un groupe d'entraînement (10) du véhicule automobile sur la structure de support (5) côté véhicule, et que pour l'amortissement de l'oscillation de fonctionnement de l'actionneur (22), le palier de groupe (12) peut être commandé à l'aide d'une unité de régulation (16).

9. Dispositif selon la revendication 8, **caractérisé en ce qu'**au moins un capteur d'oscillation (28) est prévu sur l'actionneur (22) électromécanique, dont les signaux peuvent être transférés pour la commande des paliers de groupe (12) actifs à l'unité de régulation (16).

10. Dispositif selon la revendication 8 ou 9, **caractérisé en ce que** le système de barre de torsion (18) présente par suspension de roue un actionneur (22) constitué d'un moteur électrique (24) et d'au moins un engrenage (26), qui agissent sur au moins une barre de torsion (20) en modifiant sa précontrainte et que par actionneur (22), un capteur d'oscillation (28) est prévu, lequel est relié à l'unité de régulation (16).

11. Dispositif selon la revendication 10, **caractérisé en ce que** les signaux des deux capteurs d'oscillation (28) peuvent être évalués séparément dans l'unité de régulation (16), et que par le biais de l'unité de régulation (16), seul le palier de groupe (12) se trouvant le plus près de l'actionneur (22) respectif est commandé.

12. Dispositif selon l'une quelconque des revendications précédentes 8 à 11, **caractérisé en ce que** l'actionneur (22) électromécanique ou le système de barre de torsion (18) est relié fixement, en particulier est vissé, à la structure de support (5), en particulier un cadre auxiliaire du véhicule automobile, et que le groupe d'entraînement (10) est logé au moins partiellement par le biais des paliers de groupe (12) actifs sur le cadre auxiliaire.
